# EUROPEAN PATENT SPECIFICATION

(11) **EP 2 488 354 B1**
(45) Date of publication and mention of the grant of the patent: **21.11.2018**
(21) Application number: 10771401.6
(22) Date of filing: 14.10.2010
(51) Int. Cl.: B29D 11/00

(54) **METHOD FOR THE SIMULTANEOUS MANUFACTURE OF OPHTHALMIC LENSES WITH DIFFERENT PARAMETERS ON THE SAME PRODUCTION LINE**
VERFAHREN ZUR SIMULTANEN HERSTELLUNG VON KONTAKTLINSEN MIT VERSCHIEDENEN PARAMETERN AUF DERSELBEN FERTIGUNGSLINIE
PROCÉDÉ POUR LA FABRICATION SIMULTANÉE DE LENTILLES OPHTALMOLOGIQUES COMPORTANT DES PARAMÈTRES DIFFÉRENTS SUR LA MÊME CHAÎNE DE PRODUCTION

(30) Priority: 16.10.2009 US 252523 P
(43) Date of publication of application: 22.08.2012
(73) Proprietor: Novartis AG, 4056 Basel (CH)
(72) Inventor: BIEL, Roger, 63743 Aschaffenburg (DE); HEINRICH, Axel, 63743 Aschaffenburg (DE); LANIG, Volker, 97232 Giebelstadt (DE); HARTERT, Carolin, 09322 Penig (DE); STRAUBE, Karsten, 06886 Lutherstadt Wittenberg (DE); HAGMANN, Peter, 63906 Erlenbach am Main (DE)
(74) Representative: Bohest AG
(86) International application number: PCT/EP2010/065426
(87) International publication number: WO 2011/045376

(56) References cited:
- EP-A1- 1 657 041
- EP-A2- 1 052 084
- WO-A1-2004/056555

## Description

### FIELD

The invention relates to a method for the simultaneous manufacture of ophthalmic lenses, in particular contact lenses, having different lens parameters on a closed loop production line.

### BACKGROUND

It is well established in the art to produce ophthalmic lenses, in particular hard and soft contact lenses, in an automated production process with reusable molds. In mass production of contact lenses, specifically so-called disposable lenses, a large number of contact lenses must be manufactured in a relatively short period of time. In an advantageous method of mass production, a lens forming material, e.g., a polymer or prepolymer solution, is introduced into a female mold half, the casting mold is closed by the respective male mold half and then the starting material is polymerized and/or cross-linked with ultraviolet (UV) light. The mold halves mask the UV light in the respective areas which are outside of the areas required for contact lens production. Such mass production of contact lenses which is usually performed in a closed loop process, is described, e.g., in WO 98/42497. Suitable lens forming material include polymers and prepolymers based on polyvinyl alcohols (PVA) or silicone hydrogels (SiHy) as well as based on polyethylene glycols (PEG). In context with lens forming materials the term prepolymer is used to comprise monomers, macromers and polymers having chain lengths shorter than after polymerization and/or cross-linking.

In order to meet the requirements of the market large numbers of contact lenses with different parameters must be produced. Such parameters include, e.g., the refraction power of a lens, the base curve, the toricity, etc. Thus, for the manufacture of all types of contact lenses a large number of different molds are required and must be held on stock. For the manufacture of one type of contact lens a minimum number of identical molds must be provided in order to be compatible with the closed loop process. Thus, the number of different molds multiplied with the number of identical molds results in a large number of molds which must be provided and maintained in an optimal condition. Considerable effort must be taken for the logistics of the handling of the molds.

In the production process usually a certain number of lenses are manufactured simultaneously in side by side configuration. The number of molds in side by side configuration in a know production process amounts to e.g. 7 pairs of molds which are all held in a common worktray. One pair of molds has identical configuration and results in a pair of contact lenses with identical parameter. Such a pair of molds is also designated a "lot". A worktray is loaded with 7 pairs of molds or lots allowing the simultaneous manufacture of 7 pairs of contact lenses. The pairs of molds may be distinct from each other. Thus, seven pairs of contact lenses, with each pair having parameters distinct from those of the other pairs may be manufactured simultaneously. In order to ensure a continuous cyclic manufacture, a certain number of worktrays, such as, e.g., up to 38 worktrays, is provided in a contact lens production line. The worktrays are moved sequentially through the different working stations required for the manufacture of the contact lenses. Each worktray is loaded in the same manner with the same sequence of 7 pairs of molds or lots. Thus, the production line may be compared with a highway comprising 7 pairs of lanes beneath each other. In a first pair of lanes a pair of contact lenses with identical parameters is produced. In the neighboring pair of lanes, a pair of contact lenses with parameters distinct from those of the contact lenses of the first pair of lanes is produced etc. Thus, in each pair of lanes identical lenses are manufactured, which, however, according to the identical loading of the worktrays may be distinct from those of the neighboring pairs of lanes.

In this known manufacture process the minimum number of mold for each parameter corresponds to the number of worktrays provided in a cyclic production line. Taking into account a variety of up to 50 different parameters and a number of e.g. up to 38 worktrays, it is immediately apparent that the number of molds required is very large. The production method allows only the simultaneous manufacture of a limited number of different types of contact lenses, such as, e.g., 7 pairs. If different types of contact lenses are required the production line must be refitted by loading the worktrays in an identical manner with a different sequence of mold pairs. The refitting is time- and labor-intensive and requires a stop of the production line.

It is therefore an object of the present invention to improve a method for the simultaneous manufacture of contact lenses having different parameters on the same production line such, that the number of different molds may be reduced. A method shall be provided, which allows the simultaneous manufacture of contact lenses having a parameter spectrum as required by the market. Time- and labor-intensive refitting of the production line and a therefrom resultant stop of the production line shall be reduced and mostly avoided. Malfunctions in any of the working stations shall not result in a mix-up of lens types or lots.

WO 2004/056555 A1 discloses a method for the manufacture of contact lenses on a production line with the aid of single-use molds. Contact lenses having different lens parameters (and therefore belonging to different stock keeping units "SKU") are produced sequentially, i.e. only after the last contact lens of one SKU has been produced, a contact lens of a different SKU is produced.

### SUMMARY

These and still further objects are met by a method as specified in claim 1. Further improvements of the method according to the invention and preferred embodiments are subject of the dependent claims. More particularly, a method is provided for the simultaneous manufacture of ophthalmic lenses, in particular contact lenses, having different lens parameters on a closed loop production line, comprising providing a number of different reusable molds, each of the different reusable molds comprising male and female mold halves and further comprising lens forming material in the different reusable molds, transporting the number of different reusable molds in sequential rows and in each row in side by side configuration through a series of treatment stations, the treatment stations being arranged sequentially along the closed loop production line in which the lenses having the different lens parameters are simultaneously manufactured from the lens forming material, and further identifying each lens manufactured with a lens identification code associated with each said lens.

By associating each individual lens with a lens identification code the lenses may be unmistakably identified. Thus, it is not necessary any more to keep on stock a minimum number of molds for each lens type, which number at least corresponds to the number of worktrays that may be transported through a closed loop production line. Any type of mold may be placed on any position of a worktray. Subsequent worktrays may be loaded with a completely different configuration of molds types. In contrast to the prior art method in which the number of different molds which could be transported through the production line in a closed loop process is limited by the number of positions in a worktray, the claimed invention allows the transport of any number of molds distinct from each other through the production line. Thus, a production line may simultaneously be equipped with all types of molds for all types of contact lenses. Even so-called slow movers, that are mold types for contact lenses having lens parameters which are required only in very small numbers, may be included. By this measure the minimum number of molds required for each lens type may be reduced considerably. Once the production line is equipped with a configuration of mold types reflecting the needs of the market, it may be operated continuously until the required amounts of contact lenses have been manufactured and/or until the market calls for a different spectrum of lens types. Time- and labor-intensive refitting and stops of the production line may thus also be reduced.

The lens identification code may be provided as an actual code on a surface of the manufactured lens. In an alternative embodiment the lens identification code may be provided only virtually in a control system of the production line. The control system stores the information about any lens on any position and may process this information and treat the respective lens in a later process stage in accordance with this stored information.

In an embodiment of a method for providing an actual lens identification code on a surface of the lens the production line comprises a polymer dosing station, in which lens forming material, usually a polymer or a prepolymer, is dosed into the female mold half, a polymerization station, in which the lens forming material contained within a mold cavity which is defined by lens forming surfaces of the closed mold, is polymerized and/or cross-linked, a rinsing and watering station, in which the formed lenses are removed from the respective molds and are extracted, rinsed and washed, a lens inspection station, in which the manufactured lenses are optically inspected and a packing station, in which the lenses are packaged into lens containers. The lens identification code is transferred to a surface of the lens directly from a molding surface of a respective mold half.

It proves advantageous, if the lens identification code is provided on a peripheral portion of the molding surface of the female mold half. It is the female mold half which receives the polymer or prepolymer solution. By providing the code on the female mold half a better imbedding of the code into the contact lens material may be achieved. The lens identification code is provided at the peripheral portion of the molding surface in order to have the transferred code on the lens not interfere with the optical zone of the manufactured contact lens.

There are various codes known in the prior art, which might be used for identifying the lenses. One of the most common codes which may also be identified without difficulty by respective detection systems is a pattern in binary code. A dot may correspond to a "1" while the absence of a dot may correspond to a "0". If, e.g., a pattern of 6 dot positions is used, 2⁶ = 64 different characters may be encoded. A seventh dot may be applied as an indication for a detection system, that a binary code follows. The dots may be applied in one or more lines. If more lines are used, the possible number of different codes increases correspondingly; e.g. two lines with 5 dot positions each allow 4⁵ = 1042 different characters, etc.

In a further embodiment of the invention the lens identification code may be provided on a mold half permanently, such as, e.g., by having a lens forming surface provided with engraved information. Upon molding of the lens, the engraved information is transferred to the surface of the lens.

In another embodiment of the invention the lens identification code is provided to one or both mold halves only temporary. More specifically, prior to dosing a lens forming material such as a polymer or prepolymer solution into the mold the female mold half and/or the male mold half are provided on their respective molding surfaces with a removable lens identification code. During the forming of the lens this code is transferred to the respective front and/or rear sides of the lens.

An example of a material with which the lens identification code may be established on the molding surface is a pattern of dots of polyvinylalcohol, which, after having been transferred to the contact lens surface(s), is permanently fixated there, e.g. by heat treatment.

A very convenient manner to apply the lens identification code to the molding surface is by printing it onto the molding surface with an ink-jet printer. This method is well established e.g. for creating patterns on the lenses in order to achieve specific effects or to change the color of the eye of the wearer.

The lens identification code is established such, that it is invisible to the eye on the manufactured contact lens but is detectable with the aid of an optical reading system. A method to achieve this goal is e.g. to select the size of the dot pattern such that it extends only over a segment of the lens having a length of about 80 µm to about 140 µm. Alternatively or in addition to the selected size the dots may be applied in inconspicuous colors, which are compatible with the design of the manufactured contact lenses. The dots may also be applied, e.g., in fluorescent colors or may contain UV absorbers.

The lens identification code transferred to the manufactured contact lenses from the molding surface(s) may be identified in any of the subsequent treatment stations. In one embodiment of the method according to the claimed invention the lens identification code is identified in the lens inspection station, which all lenses must pass and in which all lenses are inspected with an optical identification system, such as, e.g., a CCD camera. The CCD camera has a resolution high enough to detect the lens identification code on the contact lens and passes the information on to a control system for further processing.

The lens identification code may be established such, that it provides direct information about the lens parameters and the reusable mold in which the lens has been manufactured. Alternatively or in addition to this information the lens identification code may be composed such that it enables a control system to identify the lens parameters and the respective reusable mold or lot from one of a data base and a look-up table.

In a further embodiment of the method according to the invention each lens, either after detection of and actual lens identification code on a lens surface or after correlation of the lens and the respective virtual lens identification code, and irrespective of the lens type, is transferred into a lens container, which is sealed with a closing foil to form a single lens container package or a multi-container package. The information as obtained from the reading of the code on the lens and/or respective associated information from one of a data base and a look-up table is written onto the respective foil or foil portion sealing the respective lens container. By writing this information directly onto the closing foil or closing foil portion covering the respective lens container, each packaged lens is clearly identified. In view of the speed of the manufacturing process, the information is preferable written onto the closing foil using a laser.

Once the lens containers have been clearly marked with readable information about the lens type contained in each container, the lens containers together with the enclosed lenses, either as single container packages or as multi-container packages comprising a number of lens containers attached to each other via the closing foil, may be sorted according to the respective lens types. However, in an embodiment of the invention the sorting of the contact lenses is accomplished only after sterilization of the lens containers together with the contained lenses.

In order to sort the contact lenses according to the respective lens types the multi-containers packages are separated into individual lens container packages. The separation may be accomplished by using a die cutter.

The final sorting of the contact lenses according to the respective lens types may be accomplished in various ways, manually or automatically. Preferably an automatic sorting station is provided, in which the individual lens container packages are transported underneath an optical character reading system, the different lens types are identified by the information written onto the sealing foil, and the individual lens container packages are sorted according to the identified respective lens types into storage depots for subsequent packaging into lens sets of one lens type only.

These and still further features and advantages of the invention will become apparent from the following description of an exemplary embodiment of method, reference being made to the schematic drawings, which are not to scale, in which:

### BRIEF DESCRIPTION OF THE DRAWINGS

- Fig. 1: is a block diagram of a closed cycle production line for contact lenses; and
- Fig. 2: is a representation of a manufactured contact lens having a mold identification code on its surface.

### DETAILED DESCRIPTION

The following description of an exemplary embodiment of the invention is for illustrative purposes only and is not intended to limit of the scope of the invention.

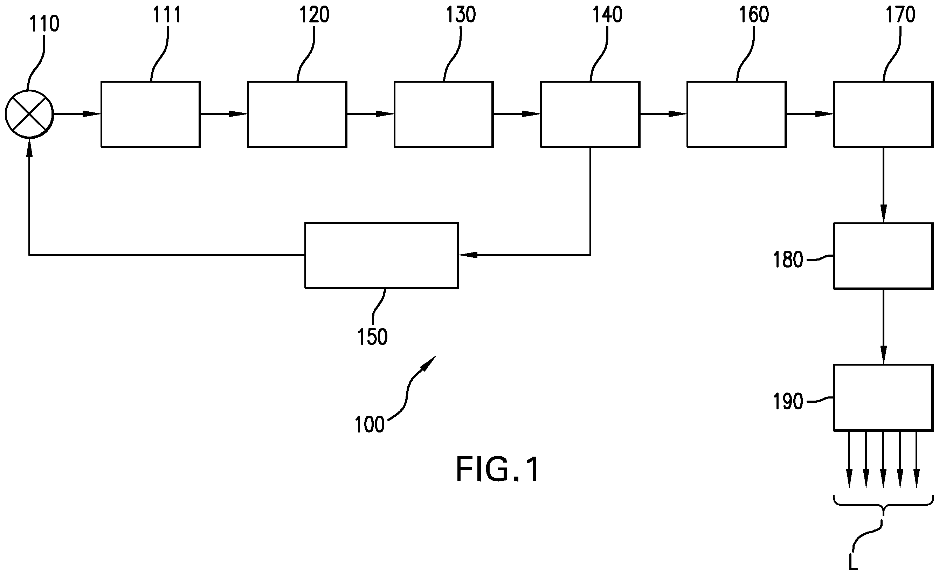

In Fig. 1 a closed cycle production line for the manufacture of ophthalmic lenses, in particular contact lenses, in a so-called full mold process in accordance with the invention is depicted as a block diagram and designated generally with reference numeral 100. It is to be noted, that only the most important steps along the production line 100 are identified. Thus, the production line 100 comprises an initializing point 110, where cleaned worktrays with a number of cleaned molds of the same or of different types in side by side configuration are starting their travel through the individual treatment stations. Each mold type comprises male and female mold halves with specifically shaped molding surfaces to manufacture a specific type of contact lens having specific lens parameters and may also be called a lot. In an embodiment of the invention a single worktray may contain, e.g., 14 molds. The total number of worktrays in a closed cycle production line depends on the design of the production line, on the transport speed, on the individual treatment times etc. and may amount, e.g., to 38 worktrays. Before the molds reach a polymer dosing station, the molds are transported to an encoding station 111. In the encoding station 11 a lens identification code is applied onto the molding surface of the female and/or the male mold halves. In an embodiment of the invention the lens identification code is printed onto the molding surface of the female mold half with an ink-jet printer. After the lens identification code has been applied the molds are transported to the dosing station 120 in which a dosed amount of polymer or prepolymer solution is introduced into each mold cavity. The molds are then closed and transported through a polymerization station 130, in which the polymer or prepolymer solution contained in the mold cavity is polymerized or cross-linked e.g. by the application of ultraviolet (UV) radiation. During the polymerization step the lens identification code is transferred from the molding surface of the respective mold half, e.g., the female mold to the formed contact lens. After the forming of the contact lens, excess and not cross-linked lens material is washed away. After the opening of the mold halves the lenses are removed from the molds and transported to a rinsing and washing station, in which they are extracted, rinsed and washed according to the requirements of the respective lens material. The worktrays with the empty molds are transported on to a mold cleaning station 150, in which they are cleaned. By this cleaning step also residues of the lens identification code on the molding surface of the male or female mold halves are removed. The cleaned worktray and molds are then transported on to the initializing point 110, where their travel through the individual treatment stations starts again.

After the extraction, rinsing and washing step the contact lenses, with the lens identification code on one of their surfaces, such as, e.g., on the front surface, are transported to a lens inspection station 160. In the lens inspection station 160 every single lens is controlled with an optical detection system, such as, e.g., a CCD camera, in order to determine if the surfaces and the edge of the lens are free from defects and conform with the requirements. The resolution of the CCD camera also allows to identify the lens identification code on the respective surface of the contact lens. With this code provided in a peripheral portion of the surface every lens may be identified and correlated to the mold in which it was formed. Depending on the code on the surface of the contact lens the encoded information may directly provide the required information and/or it may be used to obtain and supplement this information with specific information about the lens parameters which is stored in a data base or is provided in a look-up table and is passed on to a control system for the production line. Thus, the lens identification code allows an unmistakable correlation between the inspected lens and the respective mold type or lot in which it was formed. This information may also be used to identify molds with defective mold surfaces. When a lens has successfully passed the lens inspection station 160 it is transported on to a package station 170, in which every single lens is transferred into a separate lens container, which usually is filled with an isotonic saline solution. The containers are then closed with a sealing foil. The sealed lens containers with the lenses may be provided as single container packages or as multi-container packages which are attached with each other by the sealing foil. The information about the contained lens type and the important parameters thereof, is printed on every sealing foil or portion of a sealing foil for a multi-container package. The writing of this information may be accomplished e.g. with a laser.

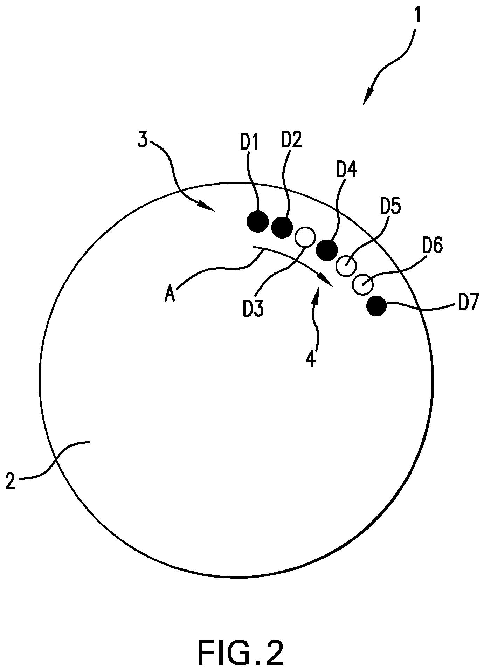

The single and multi-container packages are then transported to a sterilization station 180, usually an autoclave, where they are properly treated. Only after the sterilization station 180 the single and multi-container packages with the respective lenses contained therein are transported on to a sorting and storage station 190. In the sorting and storage station multi-container packages are separated into individual single container packages. For that purpose a die cutter may be used. The single container packages then are transported underneath an optical character reading system, which reads the information printed on the sealing foil. The single container packages are then sorted according to the identified respective lens types and transported to storage depots for subsequent packaging into lens sets of one lens type only. Finally, from the individual storage depots the lens sets are distributed to the markets, which is indicated by the arrows L in Fig. 2.

Fig. 2 shows schematically a contact lens 1 which has been manufactured in accordance with the method of the invention. The contact lens 1 is depicted in a view at its front surface 2. In a peripheral zone 3 of the front surface 2 of the contact lens 1 there is provided a dot pattern 4, comprising seven dots positions D1 - D7 which are spaced from each other equidistantly. The dot pattern 4 is not to scale but rather would be invisible to the eye. The dot pattern 4 is in binary code, with a dot representing a "1", which is indicated by a filled (blackened) dot, while no dot stands for a "0", which is indicated in Fig. 2 by an empty dot. The first dot position D1, as read from the left side, is an identification dot, which indicates the start position for the reading of the binary code. Reading is accomplished on the depicted lens 1 from left to the right side which is indicated in Fig. 2 by the arrow A. A dot pattern 4 comprising seven dot positions D1 - D7 consists of the starting dot D1 and further six dot positions D2 - D7 for encoding information. It allows the encoding of 2⁶ = 64 different characters, such as, e.g., numbers. Each encoded number may stand for a specific mold type or represent a lot number for the manufacture of a specific lens type having defined lens parameters. The detailed information about the mold or lot and the specific lens parameters may be stored in a data base or a look-up table, which may be accessible for the control system of the production line for further processing of the manufactured contact lenses, such as, e.g., sorting into storage depots for one specific lens type only, from which sets of one lens type only may be prepared for commercial use. If the dot pattern consists of a larger number of dot positions, which may be arranged in two or more rows, direct information about the mold type or lot may be encoded on the contact lens.

The claimed invention may also be performed without actually marking the lenses with a lens identification code. For that purpose a control center of the production line is provided with a specific virtual lens identification code for each lens. Thus, the control center "knows" when and at which position any one of the lenses has been manufactured. This information and/or further information about the specific lens type may then be transferred to the closing foils, when the lenses are packaged. The final sorting of the packaged lenses may then be accomplished only later, e.g., after sterilization of the lenses within the packages.

The lens identification code may be a direct or an encoded lot information, which contains information about a specific type of lens which is manufactured in a specific production lane or segment. The lens identification code may also be a mold identification code, by which every single mold in any position within the production line may be identified. Thus, an unmistakable correlation between the manufactured lenses and the respective molds may be established. This may be of help, if certain ones of the lenses are found to have surface or edge defects, which may be a result of a defective mold. The exact correlation of lens and mold helps to identify the respective mold for replacement.

The invention has been explained hereinbefore with reference to the manufacture of contact lenses. It is to be noted, that the invention also encompasses the manufacture of other types of ophthalmic lenses, such as, e.g., intraocular lenses etc. Thus, the term contact lens must not be read as limiting, but it also includes all other types of ophthalmic lenses which may be manufactured in automated manufacturing processes on closed loop production lines.

## Claims

1. A method for the simultaneous manufacture of ophthalmic lenses, in particular contact lenses (1), having different lens parameters on a closed loop production line, comprising providing a number of different types of reusable molds, each of the different types of reusable molds comprising male and female mold halves and further comprising lens forming material in the different types of reusable molds, transporting the number of different types of reusable molds in sequential rows and in each row in side by side configuration through a series of treatment stations, the treatment stations being arranged sequentially along the closed loop production line (100) in which the lenses having the different lens parameters are simultaneously manufactured from the lens forming material, wherein the treatment stations comprise a polymer dosing station (120), a polymerization station (130), a rinsing and watering station (140), a lens inspection station (160) and a packing station (170), and further identifying each lens manufactured with a lens identification code (4) associated with each said lens, **characterized in that** the lens identification code (4) is provided on a surface of the manufactured lens, and **in that** the lens identification code (4) is transferred from a mold half to the formed lens, wherein prior to dosing a lens forming material into a mold the male and/or the female mold half on its respective molding surface is provided with a removable lens identification code (4), which is transferred from the respective molding surface to a front and/or rear surface (2) of the manufactured lens (1), and wherein the lens identification code (4) is established on the molding surface as a pattern of dots which, after having been transferred to the contact lens surface(s), is permanently fixated there.

2. Method according to claim 1, wherein the lens identification code (4) is provided at a peripheral portion of the molding surface of the female half and/or the male mold half.

3. Method according to claim 1 or 2, wherein the lens identification code (4) is established as a dot pattern (D1 - D7) in binary code.

4. Method according to any one of the preceding claims, wherein the lens identification code (4) is applied to the molding surface with an ink-jet printer.

5. Method according to any one of the preceding claims, wherein the lens identification code (4) is established such, that it is invisible to the eye but detectable with the aid of an optical detection system, such as, e.g., a CCD camera.

6. Method according to claim 5, wherein the lens identification code (4) is detected in the lens inspection station (160).

7. Method according to any one of the preceding claims, wherein the lens identification code (4) is established such, that it provides direct information about the lens parameters and the reusable mold in which the lens has been manufactured and/or enables a control system to identify the lens parameters and the respective reusable mold from one of a data base and a look-up table.

8. Method according to claim 7, wherein each lens (1), after detection of the lens identification code (4) and irrespective of the lens type, is transferred into a lens container, which is sealed with a closing foil to form a single lens container package or a multi-container package, and wherein the information obtained from the reading of the lens identification code (4) on the lens and/or respective associated information from one of a data base and a look-up table is written onto the respective foil or foil portion sealing the respective lens container.

9. Method according to claim 8, wherein the information is written onto the sealing foil with a laser.

10. Method according to claim 8 or 9, wherein the lens containers together with the enclosed lenses, either as single container packages or as multi-container packages comprising a number of lens containers attached to each other via the closing foil, are sorted according to the respective lens types only after sterilization.

11. Method according to claim 10, wherein for the sorting according to the respective lens types the multi-containers packages are separated into individual lens container packages.

12. Method according to claim 11, wherein the multi-container packages are separated from each other using a die cutter.

13. Method according to claim 11 or 12, wherein the individual lens container packages are transported underneath an optical character reading system, the different lens types are identified by the information written onto the sealing foil and the individual lens container packages are sorted according to the identified respective lens types into storage depots for subsequent packaging into lens sets of one lens type only.

## Patentansprüche

1. Verfahren zur gleichzeitigen Herstellung von ophthalmischen Linsen, insbesondere Kontaktlinsen (1), mit unterschiedlichen Linsenparametern in einer Fertigungslinie mit geschlossenem Kreislauf, umfassend Bereitstellen mehrerer verschiedener Typen von wiederverwendbaren Formen, wobei jeder der verschiedenen Typen von wiederverwendbaren Formen Patrizen- und Matrizenformhälften umfasst, und ferner umfassend linsenbildendes Material in den verschiedenen Typen von wiederverwendbaren Formen, Transportieren der mehreren verschiedenen Typen von wiederverwendbaren Formen in aufeinander folgenden Reihen und in jeder Reihe in Seite-an-Seite-Konfiguration durch eine Reihe von Behandlungsstationen, wobei die Behandlungsstationen aufeinander folgend entlang der Fertigungslinie mit geschlossenem Kreislauf (100) angeordnet sind, wobei die Linsen mit den unterschiedlichen Linsenparametern gleichzeitig aus dem linsenbildenden Material hergestellt werden, wobei die Behandlungsstationen eine Polymerdosierungsstation (120), eine Polymerisationsstation (130), eine Spül- und Wässerungsstation (140), eine Linseninspketionsstation (160) und eine Verpackungsstation (170) umfassen, und ferner Identifizieren jeder hergestellten Linse mit einem Linsenidentifikationscode (4), der mit jeder der Linsen verbunden ist, **dadurch gekennzeichnet, dass** der Linsenidentifikationscode (4) auf einer Oberfläche der hergestellten Linse bereitgestellt wird, und dass der Linsenidentifikationscode (4) von einer Formhälfte auf die gebildete Linse übertragen wird, wobei vor dem Dosieren eines linsenbildenden Materials in eine Form die Patrizen- und/oder die Matrizenformhälfte auf ihrer entsprechenden Formoberfläche mit einem entfernbaren Linsenidentifikationscode (4) versehen wird, der von der entsprechenden Formoberfläche auf eine Vorder- und/oder Rückfläche (2) der hergestellten Linse (1) übertragen wird, und wobei der Linsenidentifikationscode (4) auf der Formoberfläche als Struktur von Punkten gebildet wird, die nach dem Übertragen auf die Kontaktlinsenoberfläche(n) dauerhaft dort befestigt wird.

2. Verfahren gemäss Anspruch 1, wobei der Linsenidentifikationscode (4) in einem Randbereich der Formoberfläche der Matrizen- und/oder Patrizenformhälfte bereitgestellt wird.

3. Verfahren gemäss Anspruch 1 oder 2, wobei der Linsenidentifikationscode (4) als Punktmuster (D1-D7) in Binärcode gebildet wird.

4. Verfahren gemäss einem der vorangehenden Ansprüche, wobei der Linsenidentifikationscode (4) mit einem Tintenstrahldrucker auf die Formoberfläche aufgebracht wird.

5. Verfahren gemäss einem der vorstehenden Ansprüche, wobei der Linsenidentifikationscode (4) so gebildet wird, dass er für das Auge unsichtbar, aber mit Hilfe eines optischen Detektionssystems, wie z. B. einer CCD-Kamera, detektierbar ist.

6. Verfahren gemäss Anspruch 5, wobei der Linsenidentifikationscode (4) in der Linseninspektionsstation (160) detektiert wird.

7. Verfahren gemäss einem der vorangehenden Ansprüche, wobei der Linsenidentifikationscode (4) so gebildet wird, dass er direkte Information über die Linsenparameter und die wiederverwendbare Form liefert, in der die Linse hergestellt worden ist, und/oder einem Steuersystem ermöglicht, die Linsenparameter und die entsprechende wiederverwendbare Form aus einer Datenbank oder einer Nachschlagetabelle zu identifizieren.

8. Verfahren gemäss Anspruch 7, wobei jede Linse (1) nach der Detektion des Linsenidentifikationscodes (4) und unabhängig von dem Linsentyp in einen Linsenbehälter überführt wird, der mit einer Verschlussfolie abgedichtet wird, um eine einzelne Linsenbehälterpackung oder eine Mehrbehälterpackung zu bilden, und wobei die Information, die durch das Auslesen des Linsenidentifikationscodes (4) auf der Linse erhalten wird, und/oder entsprechende zugeordnete Information aus einer Datenbank oder einer Nachschlagetabelle auf die entsprechende Folie oder den entsprechenden Folienteil, die/der den entsprechenden Linsenbehälter verschliesst, geschrieben wird.

9. Verfahren gemäss Anspruch 8, wobei die Information mit einem Laser auf die Verschlussfolie geschrieben wird.

10. Verfahren gemäss Anspruch 8 oder 9, wobei die Linsenbehälter zusammen mit den eingeschlossenen Linsen, entweder als einzelne Behälterpackungen oder als Mehrbehälterpackungen, die mehrere Linsenbehälter enthalten, die über die Verschlussfolie aneinander gebunden sind, erst nach Sterilisation nach den jeweiligen Linsentypen sortiert werden.

11. Verfahren gemäss Anspruch 10, wobei zum Sortieren nach den jeweiligen Linsentypen die Mehrbehälterpackungen zu einzelnen Behälterpackungen getrennt werden.

12. Verfahren gemäss Anspruch 11, wobei die Mehrbehälterpackungen mit Hilfe einer Stanze voneinander getrennt werden.

13. Verfahren gemäss Anspruch 11 oder 12, wobei die einzelnen Linsenbehälterpackungen unter ein optisches Zeichenlesesystem geführt werden, wobei die verschiedenen Linsentypen durch die auf die Verschlussfolie geschriebene Information identifiziert werden und die einzelnen Linsenbehälterpackungen den identifizierten jeweiligen Linsentypen entsprechend in Lagerdepots für die nachfolgende Verpackung zu Linsensätzen mit nur einem Linsentyp sortiert werden.

## Revendications

1. Procédé de fabrication simultanée de lentilles ophtalmiques, en particulier de lentilles de contact (1), ayant différents paramètres de lentille sur une ligne de production en boucle fermée, comprenant l'obtention d'un nombre de différents types de moules réutilisables, chacun des différents types de moules réutilisables comprenant des moitiés de moule mâle et femelle et comprenant en outre un matériau formant lentille dans les différents types de moules réutilisables, le transport du nombre de différents types de moules réutilisables en rangées successives et dans chaque rangée dans une configuration côte à côte à travers une série de stations de traitement, les stations de traitement étant disposées successivement le long de la ligne de production en boucle fermée (100) sur laquelle les lentilles ayant les différents paramètres de lentille sont simultanément fabriquées à partir du matériau formant lentille, les stations de traitement comprenant une station de dosage de polymère (120), une station de polymérisation (130), une station de rinçage et d'arrosage (140), une station d'inspection de lentilles (160) et une station d'emballage (170), et en outre l'identification de chaque lentille fabriquée avec un code d'identification de lentille (4) associé à chaque dite lentille, **caractérisé en ce que** le code d'identification de lentille (4) est apposé sur une surface de la lentille fabriquée, et **en ce que** le code d'identification de lentille (4) est transféré d'une moitié de moule à la lentille formée, dans lequel avant le dosage d'un matériau formant lentille dans un moule la moitié de moule mâle et/ou femelle sur sa surface de moulage respective est pourvue d'un code d'identification de lentille amovible (4), qui est transféré de la surface de moulage respective à une surface avant et/ou arrière (2) de la lentille fabriquée (1), et dans lequel le code d'identification de lentille (4) est établi sur la surface de moulage comme un motif de points qui, après avoir été transféré à la/aux surface(s) de la lentille de contact, y est fixé de façon permanente.

2. Procédé selon la revendication 1, dans lequel le code d'identification de lentille (4) est apposé dans une partie périphérique de la surface de moulage de la moitié femelle et/ou de la moitié de moule mâle.

3. Procédé selon la revendication 1 ou 2, dans lequel le code d'identification de lentille (4) est établi comme un motif de points (D1 - D7) en code binaire.

4. Procédé selon l'une quelconque des revendications précédentes, dans lequel le code d'identification de lentille (4) est appliqué à la surface de moulage avec une imprimante à jet d'encre.

5. Procédé selon l'une quelconque des revendications précédentes, dans lequel le code d'identification de lentille (4) est établi de telle sorte qu'il est invisible à l'oeil, mais détectable à l'aide d'un système de détection optique tel que, par exemple, une caméra CCD.

6. Procédé selon la revendication 5, dans lequel le code d'identification de lentille (4) est détecté dans la station d'inspection de lentilles (160).

7. Procédé selon l'une quelconque des revendications précédentes, dans lequel le code d'identification de lentille (4) est établi de telle sorte qu'il fournit des informations directes sur les paramètres de lentille et le moule réutilisable dans lequel la lentille a été fabriquée et/ou permet à un système de commande d'identifier les paramètres de lentille et le moule réutilisable respectif à partir d'une base de données ou d'une table de consultation.

8. Procédé selon la revendication 7, dans lequel chaque lentille (1), après détection du code d'identification de lentille (4) et indépendamment du type de lentille, est transférée dans un conteneur pour lentille, qui est scellé avec une feuille de fermeture pour former un colis d'un seul conteneur pour lentille ou un colis multiconteneur, et dans lequel les informations obtenues à partir de la lecture du code d'identification de lentille (4) sur la lentille et/ou les informations associées respectives provenant d'une base de données ou d'une table de consultation sont écrites sur la feuille ou partie de feuille respective scellant le conteneur pour lentille respectif.

9. Procédé selon la revendication 8, dans lequel les informations sont écrites sur la feuille de scellage avec un laser.

10. Procédé selon la revendication 8 ou 9, dans lequel les conteneurs pour lentilles conjointement avec les lentilles enfermées, sous la forme de colis d'un seul conteneur ou de colis multiconteneurs comprenant un nombre de conteneurs pour lentilles attachés les uns aux autres par la feuille de fermeture, sont triés en fonction des types de lentille respectifs uniquement après stérilisation.

11. Procédé selon la revendication 10, dans lequel pour le tri en fonction des types de lentille respectifs, les colis multiconteneurs sont séparés en colis de conteneurs pour lentilles individuels.

12. Procédé selon la revendication 11, dans lequel les colis multiconteneurs sont séparés les uns des autres au moyen d'une poinçonneuse.

13. Procédé selon la revendication 11 ou 12, dans lequel les colis de conteneurs pour lentilles individuels sont transportés sous un système de lecture de caractères optiques, les différents types de lentille sont identifiés par les informations écrites sur la feuille de scellage et les colis de conteneurs pour lentilles individuels sont triés en fonction des types de lentille respectifs identifiés dans des dépôts de stockage pour conditionnement consécutif en lots de lentilles d'un seul type de lentille.
